# EUROPEAN PATENT APPLICATION

(11) **EP 4 083 404 A1**
(43) Date of publication of application: **02.11.2022**
(21) Application number: 22165680.4
(22) Date of filing: 30.03.2022
(51) Int. Cl.: F02C 7/32, F02C 7/36

(54) **AIRCRAFT ENGINE SYSTEM INCLUDING A CLUTCH AND MOTOR CONTROLLER FOR SELECTIVELY CONNECTING A GENERATOR AND A TURBINE ENGINE**

(30) Priority: 29.04.2021 US 202163181422 P
(71) Applicant: Hamilton Sundstrand Corporation, Charlotte, NC 28217-4578 (US)
(72) Inventor: HAYES, Tyler W., Rockford, 61107 (US); ALTHOF, Jon Barry, Loves Park, 61111 (US); FINKE, Aaron M., Janesville, 53548 (US); KHERALUWALA, Mustansir, Lake Zurich, 60047 (US)
(74) Representative: Dehns

(57) **Abstract**

An engine system (10) includes a turbine engine (14) having a high pressure spool (28) and a low pressure spool (26). A transmission includes an input shaft (31) connected to one of the high pressure spool (28) and the low pressure spool (26), and an output shaft (33). A clutch (40) is arranged between the input shaft (31) and the output shaft (33). A generator (36) is connected to the output shaft (33). A clutch controller (42) activates the clutch (40) when one of the high pressure spool (28) and the low pressure spool (26), and the generator (36) are operating at a selected speed range.

## Description

### CROSS-REFERENCE TO RELATED APPLICATIONS

This application claims the benefit of U.S. Provisional Patent Application No. 63/181,422, filed April 29, 2021, the disclosure of which is incorporated herein by reference in its entirety.

### BACKGROUND

Exemplary embodiments pertain to the art of aircraft and, more particularly, to a clutch and motor controller system for connecting a generator to a turbine engine on an aircraft.

Many aircraft include a generator that acts as an auxiliary power unit (APU) that provides electrical power to aircraft accessories. Typically, the generator is directly driven by a high pressure spool of a turbine engine that powers the aircraft. The high pressure spool has a speed range that is compatible with the generator. The direct connection drives the generator as long as the turbine engine is in operation.

### SUMMARY

According to an aspect, disclosed is an engine system including a turbine engine having a high pressure spool and a low pressure spool. A transmission includes an input shaft connected to one of the high pressure spool and the low pressure spool, and an output shaft. A clutch is arranged between the input shaft and the output shaft. A generator is connected to the output shaft. A clutch controller activates the clutch when one of the high pressure spool and the low pressure spool, and the generator are operating at a selected speed range.

Additionally, or alternatively, in this or other embodiments a motor controller operatively connected to the generator, the motor controller driving the generator to a selected speed prior to activation of the clutch.

Additionally, or alternatively, in this or other embodiments a turbine engine speed sensor is operable to detect a speed of one of the high pressure spool and the low pressure spool and a generator speed sensor is operable to detect a speed of the generator. The clutch controller is coupled to the turbine engine speed sensor and the generator speed sensor and operable to activate the clutch when each of one of the high pressure spool and the low pressure spool, and the generator are operating within the selected speed range.

Additionally, or alternatively, in this or other embodiments the input shaft is operatively connected to the low pressure spool of the turbine engine.

According to a further aspect, disclosed is a method of driving a generator connected to a turbine engine. The method includes detecting a spool speed of the turbine engine, wherein the spool speed is one of a high pressure spool speed and a low pressure spool speed, engaging a clutch coupled to the one of a high pressure spool and a low pressure spool under a first condition if the spool speed is below a first speed threshold, activating a motor controller to drive the generator to a selected operating speed if the spool speed is above the first speed threshold, and engaging the clutch when the generator is at or above the selected operating speed.

Additionally, or alternatively, in this or other embodiments the clutch is disengaged when one of the high pressure spool speed and the low pressure spool speed exceeds a maximum operating speed of the generator.

Additionally, or alternatively, in this or other embodiments the generator is operated at a stand-by speed after disengaging the clutch.

Additionally, or alternatively, in this or other embodiments operating the generator at the stand-by speed includes powering the generator with the motor controller.

Additionally, or alternatively, in this or other embodiments engaging the clutch operatively connects the generator to the low pressure spool of the turbine engine.

Additionally, or alternatively, in this or other embodiments engaging the clutch when the generator is at the selected operating speed includes receiving speed data from a generator speed sensor at a clutch controller.

### BRIEF DESCRIPTION OF THE DRAWINGS

The following descriptions should not be considered limiting in any way. With reference to the accompanying drawings, like elements are numbered alike:
FIG. 1 is a block diagram depicting an engine system including a clutch, in accordance with a non-limiting example; and
FIG. 2 is a block diagram illustrating a clutch controller of the engine system of FIG. 1, in accordance with a non-limiting example.

### DETAILED DESCRIPTION

A detailed description of one or more embodiments of the disclosed apparatus and method are presented herein by way of exemplification and not limitation with reference to the Figures.

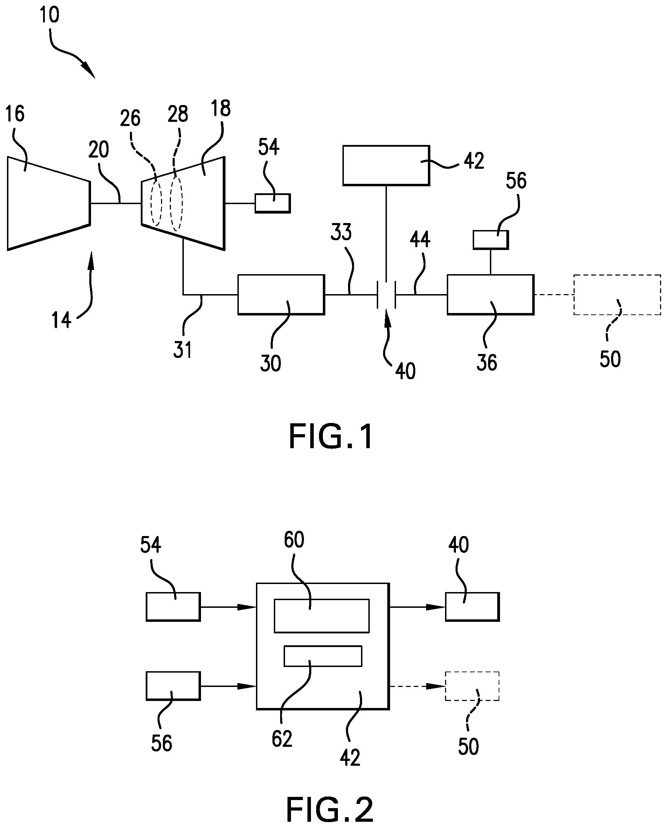

An engine system, in accordance with a non-limiting example, is indicated generally at 10 in FIG. 1. Engine system 10 includes a turbine engine 14 having a compressor portion 16 connected to a turbine portion 18 by a shaft 20. Turbine portion 18 includes a low pressure spool 26 and a high pressure spool 28. Turbine engine 14 is connected to a gear box 30 via an input shaft 31. Gear box 30 includes an output shaft 33 that is connected to an electric power generator/motor 36. A clutch 40 is disposed between output shaft 33 and input shaft member 44 of generator 36. As will be detailed herein, clutch 40 is selectively activated to operatively connect generator 36 to turbine portion 18.

In a non-limiting example, clutch 40 operatively connects generator 36 with low pressure spool 26. However, it should be understood that clutch 40 may also be arranged to operatively connect generator 36 with high pressure spool 28. In a non-limiting example, a clutch controller 42 is connected to and selectively activates clutch 40 as will be detailed herein. As shown in FIG. 1, clutch 40 is connected to an input shaft member 44 of generator 36.

A motor controller 50 may be connected to generator 36. Motor controller 50 is selectively operated to place generator 36 in, for example, a stand-by mode during selected flight phases and allows the generator to remain idle or driven by clutch 40 in other flight phases. In the stand-by mode, input shaft member 44 rotates at a selected speed that may be in or near to an operating speed of low pressure spool 26. A first speed sensor 54 may be connected to turbine portion 18 and a second speed sensor 56 may be connected to generator 36. In a non-limiting example, first speed sensor 54 takes the form of a turbine engine speed sensor that may represent a ratio of low pressure spool speed through the use of gearing (not shown). However, for the sake of simplicity, first speed sensor 54 will be described as sensing the speed of low pressure spool 26. First speed sensor 54 is connected to low pressure spool 26 and detects low pressure spool speed, and second speed sensor 56, which may take the form of a generator speed sensor connected to input shaft member 44 of generator 36.

As shown in FIG. 2, in accordance with a non-limiting example, clutch controller 42 may take the form of an electronic clutch controller and include a central processing unit (CPU) 60 and a non-volatile memory 62 having stored therein a set of instructions for selectively activating clutch 40. Of course, it should be understood that clutch controller 42 may take on various formed and need not be limited to electronic examples. Clutch controller 42 receives speed data from first speed sensor 54 and second speed sensor 56 and, based on the set of instructions, activates clutch 40 when generator 36 and turbine portion 18 are operating within a selected speed range as will be detailed herein.

In accordance with a non-limiting example, in a first condition, clutch 40 may be engaged when generator 36 is idle. That is, if clutch controller 42 senses, through first speed sensor 54 that low pressure spool 26 is rotating below a predetermined first speed threshold, clutch controller 42 activates clutch 40 with generator 36 being idle or at a stop. That is, when low pressure spool is rotating at a speed below the predetermined first speed threshold, there is no need to bring generator 36 to stand-by speed or up to a selected operating speed that is close to the speed of the low pressure spool. If low pressure spool 26 is operating above the predetermined first speed threshold, motor controller 50 may increase speed of generator 36 to a selected speed that allows for clutch activation without placing a torque drain on turbine engine 14 or causing excessive wear on clutch 40.

Generator 36 may remain coupled to low pressure spool 26 through clutch 40 over a defined operating speed range. If/when clutch controller 42 detects that low pressure spool 26 is approaching speeds that exceed a defined maximum operating speed for generator 36, or fall below a defined minimum, operating speed of generator 36, clutch 40 will be disengaged. While disengaged, motor controller 50 may maintain generator 36 at a stand-by speed to facilitate re-connecting once low pressure spool 26 returns to a speed that is below the maximum operating speed of generator 36. The stand-by speed may vary and could be near the maximum operating speed or lower. Of course, it should be understood that generator 36 may be allowed to come to a stand-still and then be re-engaged when low pressure spool 26 is below the predetermined first speed threshold.

At this point, it should be understood that the non-limiting examples described herein allow a generator to be connected to a turbine engine without creating a torque drain or placing excessive wear into the clutch. The generator and turbine speeds are sensed and the clutch activated when each member is operating at a selected speed. If, for example, the generator is below the selected speed, the motor controller may increase the speed of the generator before activating the clutch. Further, if the turbine is operating at a speed that is above a maximum operating speed of the generator, the clutch may be disengaged, and the generator may be maintained at a stand-by speed by a motor controller, until a desired speed match exists.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An engine system comprising:
a turbine engine including a high pressure spool and a low pressure spool;
a transmission including an input shaft connected to one of the high pressure spool and the low pressure spool, and an output shaft;
a clutch arranged between the input shaft and the output shaft;
a generator connected to the output shaft; and
a clutch controller that activates the clutch when one of the high pressure spool and the low pressure spool, and the generator are operating at a selected speed range.

2. The engine system according to claim 1, further comprising: a motor controller operatively connected to the generator, the motor controller driving the generator to a selected speed prior to activation of the clutch.

3. The engine system according to claim 1 or 2, further comprising:
a turbine engine speed sensor operable to detect a speed of one of the high pressure spool and the low pressure spool;
a generator speed sensor operable to detect a speed of the generator,
wherein the clutch controller is coupled to the turbine engine speed sensor and the generator speed sensor and operable to activate the clutch when each of one of the high pressure spool and the low pressure spool, and the generator are operating within the selected speed range.

4. The engine system according to claim 1, 2 or 3, wherein the input shaft is operatively connected to the low pressure spool of the turbine engine.

5. A method of driving a generator connected to a turbine engine comprising:
detecting a spool speed of the turbine engine, wherein the spool speed is one of a high pressure spool speed and a low pressure spool speed;
engaging a clutch coupled to the one of a high pressure spool and a low pressure spool under a first condition if the spool speed is below a first speed threshold;
activating a motor controller to drive the generator to a selected operating speed if the spool speed is above the first speed threshold; and
engaging the clutch when the generator is at or above the selected operating speed.

6. The method of claim 5, further comprising: disengaging the clutch when one of the high pressure spool speed and the low pressure spool speed exceeds a maximum operating speed of the generator.

7. The method of claim 6, further comprising: operating the generator at a stand-by speed after disengaging the clutch.

8. The method of claim 7, wherein operating the generator at the stand-by speed includes powering the generator with the motor controller.

9. The method of any of claims 5 to 8, wherein engaging the clutch operatively connects the generator to the low pressure spool of the turbine engine.

10. The method of any of claims 5 to 9, wherein engaging the clutch when the generator is at the selected operating speed includes receiving speed data from a generator speed sensor at a clutch controller.
